# EUROPÄISCHE PATENTANMELDUNG

(11) **EP 1 431 751 A2**
(43) Veröffentlichungstag der Anmeldung: **23.06.2004**
(21) Anmeldenummer: 03024262.2
(22) Anmeldetag: 23.10.2003
(51) Int. Cl.: G01N 21/88

(54) **Verfahren, Vorrichtung und Computerprogramm zur optischen Oberflächenerfassung**

(30) Priorität: 20.12.2002 DE 10261865
(71) Anmelder: Volkswagen Aktiengesellschaft, 38436 Wolfsburg (DE); Uwe Braun GmbH, Licthsysteme, Prozesstechnik, Fahrzeugmodule, 19309 Lenzen (Elbe) (DE)
(72) Erfinder: Braun, Uwe Peter, 19309 Lenzen/Elbe (DE); Gose, Horst-Walter, 29378 Wittingen (DE); Felgner, Holger, 16909 Wittstock (DE)

(57) **Zusammenfassung**

Die Erfindung betrifft ein Verfahren zur optischen Oberflächenerfassung von einem oder mehreren Bauteilen (1), insbesondere von Karosserieteilen (31), wobei das Bauteil (1) durch um das Bauteil herum angeordnete optische Quellen (2) mit überwiegend parallelem Strahlengang (20) beleuchtet wird. Dabei werden durch die Verarbeitungseinrichtung (10) die optischen Quellen (2) derart angesteuert, dass eine Teilfläche (1a) des Bauteils (1) überwiegend durch mindestens eine optische Quelle (2a) mit einem spitzen Anstrahlwinkel (22) zur Teilfläche (1a) beleuchtet wird. Weiterhin werden durch eine optische Erfassungseinrichtung (4) Bilddaten an die Verarbeitungseinrichtung (10) übermittelt und dort zumindest vorübergehend gespeichert, wobei die Bilddaten zumindest diese Teilfläche (1a) des Bauteils (1) wiedergeben. Dieses Verfahren wird wiederholt, bis vorab definierte Teilflächen (1a, 1b) des Bauteils (1) durch die Verarbeitungseinrichtung (10) erfasst sind. Die Verarbeitungseinrichtung (10) fügt nun die Bilddaten der Teilflächen (1a, 1b) zu einem neuen Bild zusammen.

## Beschreibung

Die Erfindung betrifft ein Verfahren, eine Vorrichtung und ein Computerprogrammprodukt zur optischen Oberflächenerfassung von einem oder mehreren Bauteilen, insbesondere von Karosserieteilen, wobei das Bauteil durch um das Bauteil herum angeordnete optische Quellen mit überwiegend parallelem Strahlengang beleuchtet wird.

Hohe Qualitätsanforderungen während oder nach der Produktion an die Oberflächen von Bauteilen, insbesondere von Karosserieteilen, erfordern eine umfassende Kontrolle dieser Teile. Insbesondere bei Karosserieteilen kann eine frühzeitige Erkennung von Oberflächenfehlern zur deutlichen Kostenreduzierung beitragen. Beulen, Pickel und Dellen von Bauteilen werden von einem Betrachter insbesondere nach einer Lackierung als Qualitätsmangel wahrgenommen. Aufgrund der in der Automobilindustrie auftretenden Stückzahlen kann eine zusätzliche Automatisierung zur weiteren Kostensenkung führen. Weiterhin wird durch eine zuverlässige Automatisierung der Oberflächenkontrolle mit hohen Fehlererkennungsraten die Belastung von Prüfpersonen, die eine visuelle Kontrolle durchführen, deutlich reduziert.

Aus der DE 39 09 221 A1 ist ein Verfahren zum Detektieren von einer oder mehreren Fehlstellen vorzugsweise von Rissen und/oder Einschnürungen an Pressteilen oder anderen Werkstücken durch optische Abtastung von deren Oberfläche bekannt. Dabei wird eine Beleuchtungseinrichtung zur Beleuchtung eines Oberflächenbereiches des Werkstückes und ein optisches Empfangssystem zur Aufnahme des beleuchteten Oberflächenbereiches derart eingestellt, dass die unterschiedlichen Reflexionseigenschaften von Fehlstellen an diesen Oberflächen gegenüber ihrem Umfeld bei der Erzeugung eines Bildes wirksam werden.

Aus der DE 197 16 264 A1 ist eine Vorrichtung und ein Verfahren zur Überprüfung einer Oberfläche eines Gegenstandes bekannt, wobei die Überprüfung mittels einer Lichtquelle und einem Lichtsensor zur Erfassung von durch eine Erhebung der Oberfläche gestreutem Licht vorgenommen wird. Der von der Lichtquelle erzeugte Lichtstrahl ist derart als Streiflicht hinsichtlich der Oberfläche ausgerichtet, dass die Erhebung der Oberfläche eine Streuung des Lichtstrahls zur Folge hat.

Aufgabe der Erfindung ist es, eine optische Oberflächenerfassung von einem oder mehreren Bauteilen zu ermöglichen, deren Oberfläche auf mehreren Ebenen angeordnet sein kann. Die Aufgabe wird durch ein Verfahren gemäß Anspruch 1 und eine Einrichtung gemäß Anspruch 14 zur optischen Oberflächenkontrolle von einem oder mehreren Bauteilen sowie einem Computerprogrammprodukt gemäß Anspruch 20, welches in einer Verarbeitungseinrichtung der Einrichtung zur optischen Oberflächenkontrolle läuft, gelöst. Bevorzugte Ausgestaltungen der Erfindung sind Gegenstand der Unteransprüche.

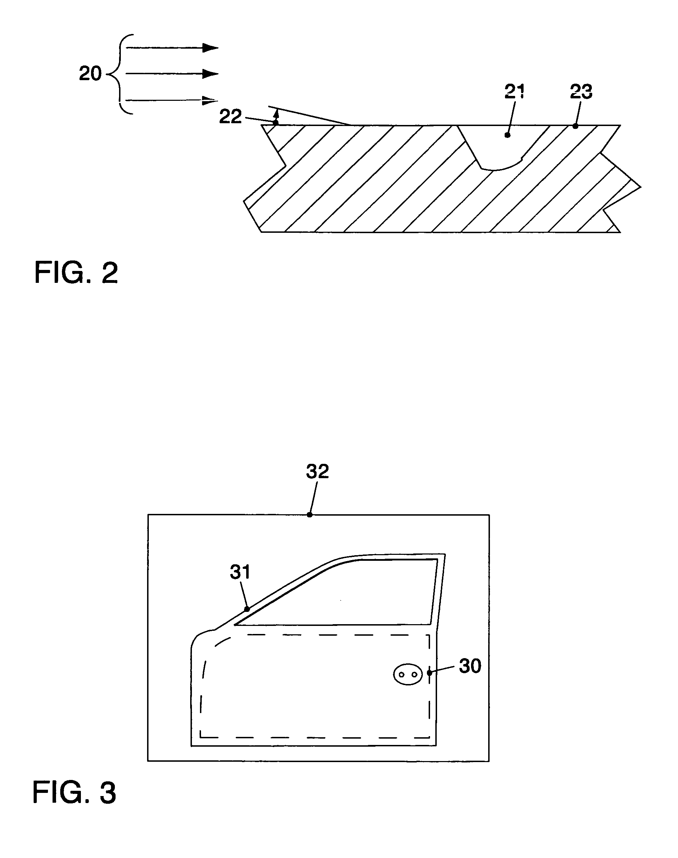

Bei dem erfindungsgemäßen Verfahren werden die optischen Quellen durch die Verarbeitungseinrichtung so angesteuert, dass eine Teilfläche des Bauteils überwiegend durch mindestens eine optische Quelle mit einem spitzen oder flachen Anstrahlwinkel zur Teilfläche beleuchtet wird. Der Anstrahlwinkel definiert sich dabei gemäß Figur 2 als Winkel zwischen einem in der Oberflächenebene verlaufenden Strahl und der Oberflächennormalen, wobei ein senkrecht auf die Oberfläche auftreffender Lichtstrahl einen Anstrahlwinkel von 90° aufweist.

Weiterhin werden durch eine optische Erfassungseinrichtung Bilddaten an die Verarbeitungseinrichtung übermittelt und dort zumindest vorübergehend gespeichert, wobei die Bilddaten zumindest eine Teilfläche des Bauteils wiedergeben. Je nach Anzahl der zu überwachenden Teilflächen des Bauteils werden die Verfahrensschritte 1.2 und 1.3 gemäß Patentanspruch 1 so oft wiederholt, bis alle vorab definierten Teilflächen des Bauteils durch die Verarbeitungseinrichtung erfasst sind. Die Verarbeitungseinrichtung fasst sodann die zu überwachenden Bilddaten der Teilflächen zu einem neuen Bild zusammen. Dabei können beispielsweise Bildverarbeitungstechniken zum Einsatz kommen, welche die relevanten Teilflächen aus dem jeweiligen Bild ausschneiden oder herauskopieren und in einem neuen Bild oder einem in einem Speicherbereich der Verarbeitungseinrichtung ablegen. Somit wird ein neues Bild oder ein neuer Datensatz geschaffen, der die zu prüfenden Teilflächen eines Bauteils enthält.

Dadurch, dass die zu überwachenden Oberflächen des Bauteils mit einem spitzen Anstrahlwinkel beleuchtet werden, dass heißt der Strahlengang der optischen Quelle läuft nahezu parallel zur betrachteten Teilfläche, lassen sich durch Schattenbildung und Lichtbeugung Oberflächenfehler erfassen. Sämtliche optimal beleuchtete Oberflächen sind sodann in einem neuen, quasi virtuellem Bild zusammengefügt und lassen sich beispielsweise speicheroptimiert weiterverarbeiten. Dadurch dass das neue Bild mit einem gespeicherten Referenzbild verglichen wird, lässt sich in einem weiteren Arbeitsschritt das gesamte optimal für die Prüfung beleuchtete Bauteil prüfen. Vorzugsweise wird das Bauteil mit einem Winkel beleuchtet, bei dem ein Großteil der einfallenden Strahlung, auch bei stumpfer, rauher Oberfläche, reflektiert wird (Glanzwinkel).

Vorzugsweise werden die Abweichungen zwischen dem neu generierten Bild und einem beispielsweise in der Verarbeitungseinrichtung vorliegenden Referenzbild angezeigt. Unterschiede der zu vergleichenden Bilder lassen sich somit vorteilhaft darstellen und feststellen.

Dadurch das die Teilflächen nacheinander beleuchtet werden, lässt sich eine jeweilige Teilfläche optimal ausleuchten, ohne dass weitere, störende Lichtquellen auf die zu prüfende Teiloberfläche strahlen. In einer weiteren bevorzugten Ausführungsform werden die jeweiligen Orte oder Gebiete der festgestellten Abweichungen auf das Bauteil projiziert. Dadurch lassen sich die festgestellten Abweichungen in einfacher Weise optisch auf dem jeweiligen Bauteil direkt erkennen. Dieses bietet die Möglichkeit in einem weiteren Arbeitsschritt die Abweichung nochmals zu überprüfen.

Weiterhin vorteilhaft ist es, die Orte oder Gebiete der festgestellten Abweichungen auf dem Bauteil direkt zu markieren. Somit lassen sich Abweichungen auch permanent auf dem Bauteil erkennen. Bauteile mit Abweichungen können beispielsweise in einem späteren Arbeitsgang nochmals überprüft bzw. nachgearbeitet werden, ohne diese nochmals zur Kenntlichmachung der Oberflächenabweichung durch das Oberflächenerfassungssystem zu schleusen.

Dadurch dass die optischen Quellen im wesentlichen auf einem Kreisbogen um das Bauteil herum angeordnet werden, kann nahezu jeder Lichteinfallswinkel zum Bauteil erreicht werden. Der Kreisbogen kann sich dabei auch zumindest teilweise auf einer Kugel bzw. Halbkugelform um das Bauteil erstrecken. Somit lassen sich nicht nur Anstrahlwinkel in einer Ebene zum Bauteil einstellen, sondern es steht nahezu jeder Raumwinkel für die Anstrahlung zur Verfügung.

Dadurch dass die optische Erfassungseinrichtung und/oder die optische Quelle durch Signale der Verarbeitungseinrichtung geschwenkt und/oder verfahren werden, können automatisiert Erfassungs- bzw. Anstrahlwinkel zum Bauteil bzw. zugehörigen Teilflächen eingestellt werden. In einer bevorzugten Ausführungsform speichert die Verarbeitungseinrichtung Bilddaten von fehlerhaften Bauteilen elektronisch ab. Damit lassen sich auch zu einem späteren Zeitpunkt die Bilddaten der Bauteile beispielsweise aus einem Arbeitsspeicher der Verarbeitungseinrichtung oder einem Datenträger (z.B. Festplatte) aufrufen und nochmals kontrollieren. Es ist auch denkbar, dass sämtliche Bilddaten elektronisch gespeichert werden, um einen lückenlosen Nachweis der Oberflächenbeschaffenheit der jeweiligen Bauteile erbringen zu können.

Dadurch dass die Verarbeitungseinrichtung erfasste Bauteile statistisch auswertet, können Statistiken über das Vorhandensein bestimmter Fehler erstellt werden. Hiermit lassen sich beispielsweise Fehlerquellen (z.B. ungünstige oder vermeidbare Produktionsverfahrensschritte) gezielter orten. In einer vorteilhaften Ausführungsform der Erfindung wird nach Erkennung von Abweichungen von dem Referenzbild zu dem neuen Bild ein Kennsignal erzeugt und/oder ausgegeben. Damit lässt sich beispielsweise akustisch anzeigen, dass ein fehlerhaftes Bauteil erkannt wurde. Dadurch dass durch die Verarbeitungseinrichtung ein Signal zur Anzeige und/oder Ausschleusung von fehlerhaften Bauteilen generiert wird, kann optisch signalisiert werden, dass sich ein fehlerhaftes Bauteil in der Einrichtung befindet. Weiterhin kann mit diesem Signal eine Ausschleusung des fehlerhaften Bauteils vorgenommen werden. Somit lassen sich beispielsweise fehlerhafte Bauteile zentral lagern oder einer Nachbearbeitung zuführen.

In einer bevorzugten Ausführungsform führt die Verarbeitungseinrichtung eine Bauteilerkennung durch, wobei auf elektronisch gespeicherte Informationen zurückgegriffen wird. Wenn unterschiedliche Bauteile durch die Erfassungseinrichtung geschleust werden, so ist zum Feststellen von Abweichungen ein jeweils zugehöriges Referenzbild erforderlich. Mit einer Bauteilerkennung, welche beispielsweise optisch durchgeführt werden kann, kann ein hierzu gehöriges Referenzbild durch die Verarbeitungseinrichtung automatisch ausgewählt werden. Eine Erfassungsanlage kann somit mit unterschiedlichen, bekannten Bauteilen bestückt werden. Es ist auch denkbar, dass Bauteile bzw. deren Oberflächen durch die Anlage "gelernt" werden. Somit lassen sich in einfacher Weise neue Bauteile zur Oberflächenprüfung in die Anlage einführen. Ein Bediener legt ein oberflächenfehlerfreies Bauteil in die Einrichtung, beleuchtet zu prüfende Teilflächen erfindungsgemäß, erfasst zugehörige Bilder in der Verarbeitungseinrichtung und erstellt, beispielsweise mit Bildverarbeitungstechniken bekannter Grafikprogramme, ein neues Bild. Dieses wird nun als zu dem Bauteil zugehöriges Referenzbild abgespeichert.

Eine erfindungsgemäße Einrichtung zur optischen Oberflächenkontrolle ist vorteilhaft derart ausgebildet, dass das Bauteilaufnahmegebiet durch mindestens eine von der Verarbeitungseinrichtung bestimmbare und in ihrer Lichtleistung von dieser einstellbaren optischen Quelle beleuchtbar ist. Dadurch kann die Verarbeitungseinrichtung je nach zu prüfendem Bauteil eine um das Bauteil befindliche optische Quelle ansteuern und die Lichtleistung dieser als auch der weiteren optischen Quellen einstellen oder verändern.

In einer bevorzugten Ausführungsform ist die Verarbeitungseinrichtung derart ausgebildet, dass die optischen Quellen in ihrer Lichtleistung ansteuerbar sind und/oder angesteuert werden, so dass Teilflächen eines Bauteils, welches sich in einem Bauteilaufnahmegebiet befindet, optimal zur erfindungsgemäßen Oberflächenprüfung angestrahlt werden, indem sie überwiegend durch mindestens eine optische Quelle mit einem spitzen Anstrahlwinkel zur Teilfläche beleuchtbar sind. Die optische Erfassungseinrichtung übermittelt sodann der Verarbeitungseinrichtung zu speichernde Bilddaten der einzelnen Teilfläche, welche von der Verarbeitungseinrichtung zu einem neuen Bild zusammenführbar sind und/oder zusammengeführt werden.

In einer bevorzugten Ausführungsform sind die optischen Quellen zumindest abschnittsweise ringförmig um das Bauteilaufnahmegebiet herum angeordnet. Dadurch ist nahezu jeder Anstrahlwinkel für eine Teiloberfläche einstellbar. Die optischen Quellen können dabei auch zumindest abschnittsweise auf einer Halbkugel angeordnet sein.

Dadurch dass mit der Verarbeitungseinrichtung Bilddaten flüchtig oder permanent elektronisch speicherbar sind, lassen sich Daten zur späteren Verwendung in einfacher Weise abspeichern. Die Abspeicherung kann dabei zur Archivierung der jeweiligen Daten herangezogen werden, als auch um Daten aus unterschiedlichen Bildern zu einem neuen Bild zusammenzufügen.

In einer bevorzugten Ausführungsform sind von der Verarbeitungseinrichtung detektierte Abweichungen auf einer Ausgabeeinheit anzeigbar. Somit sind die Abweichungen beispielsweise auf einem Bildausgabegerät anzeigbar. Dadurch, dass durch die Einrichtung eine Bauteilerkennung durchführbar ist, können unterschiedliche Bauteile durch die Einrichtung geprüft werden.

Ein erfindungsgemäßes Computerprogrammprodukt ist in einem internen Speicher der Verarbeitungseinrichtung ladbar und umfasst Programmabschnitte mit denen mindestens ein erfindungsgemäßer Verfahrensschritt ausgeführt wird und/oder ausführbar ist, wenn das Computerprogrammprodukt in der Verarbeitungseinrichtung läuft.

Bevorzugte Ausführungsformen der Erfindung werden nachfolgend anhand der Figuren beschrieben. Dabei zeigen:
- Fig. 1:: eine Einrichtung zur optischen Oberflächenkontrolle,
- Fig. 2:: einen Schnitt durch eine fehlerhafte Stelle eines Bauteils,
- Fig. 3:: eine Bildaufnahme eines zu prüfenden Bauteils und
- Fig. 4:: eine schematische Darstellung zum Verfahren der Zusammenführung von Bilddaten mit einem anschließenden Referenzbildvergleich.

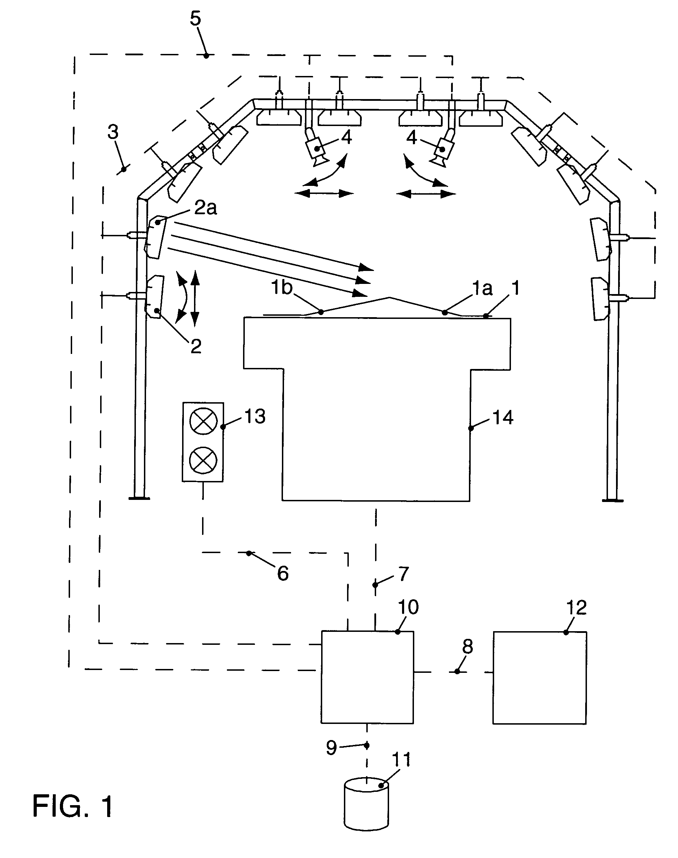

Figur 1 zeigt eine Einrichtung zur optischen Oberflächenkontrolle mit optischen Quellen 2, welche annähernd halbkreisförmig um ein Bauteil 1 angeordnet sind. Die optischen Quellen 2 sind über eine Ansteuerleitung 3 mit einer Verarbeitungseinrichtung 10 verbunden. Die Verarbeitungseinrichtung 10 steuert über digital vergebene Adressen der optischen Quellen 2 diese an und gibt ihnen digital oder analog Sollwerte vor, welche einer bestimmten Lichtintensität oder -leistung entsprechen. Die optischen Quellen 2 verfügen ihrerseits über entsprechende Schnittstellen und Vorschaltgeräte, um eine erfindungsgemäße Ansteuerung zu ermöglichen.

Das Bauteil 1 mit den Teilflächen 1a, 1b ist in einem Bauteilaufnahmegebiet einer Fördereinrichtung 14 positioniert, wobei die optische Quelle 2a die Teilfläche 1a mit einem spitzen Winkel 22 (s. Figur 2) anstrahlt. Bei der Fördereinrichtung 14 kann es sich um ein Förderband als auch um eine Ablage handeln, auf der das Bauteil 1 angeordnet ist. Eine Ansteuerung der Fördereinrichtung 14 (Geschwindigkeit, Halt, Weitergabe, ...) kann über die Datenleitung 7 von der Verarbeitungseinrichtung (10) erfolgen.

Die Anordnung der optischen Quellen 2 ermöglicht es, eine Teilfläche 1a, 1b aus jeder Richtung anzustrahlen, wobei die Teilfläche 1a, 1b vorzugsweise mit einem spitzen Winkel 22 angestrahlt wird. Die eingesetzten Einzelleuchten, die um das zu prüfende Objekt angeordnet sind, weisen einen überwiegend parallelen Strahlengang auf, um Oberflächenfehler 21 (s. Figur 2) des Bauteils 1 zu erkennen.

Mittels der Verarbeitungseinrichtung 10 wird eine Bauteilerkennung durchgeführt. Dabei wird in einem ersten Schritt eine Teilfläche 1a mit einem überwiegend parallelen Licht angestrahlt. Eine optische Erfassungseinrichtung 4 übermittelt erfasste Bilddaten des Bauteils 1 über die Datenleitung 5 an die Verarbeitungseinrichtung 10. In einem nächsten Schritt verändert die Verarbeitungseinrichtung 10 über die Ansteuerleitung 3 die Lichtleistung der optischen Quellen 2 derart, dass nun eine anderen Teilfläche 1b von überwiegend einer weiteren optischen Quelle 2 flach angestrahlt wird. Die optischen Quellen 2 sind über eine Datenbusleitung mit der Verarbeitungseinrichtung 10 verbunden, damit für unterschiedliche Bauteile 1 die Einzeleinstellung jeder Leuchte für eine optimale Anstrahlung der jeweiligen Teilfläche 1a, 1b erfolgen kann.

Die optischen Quellen 2 können auch, anders als im dargestellten Beispiel, nicht auf einem Halbkreis angeordnet werden. Bei der Regelung der Lichtleistung der optischen Quellen 2 ist dabei die quadratische Entfernungsabhängigkeit der Strahlungsintensität des zu beleuchtenden Objekts zu beachten. Um einen optimalen Kontrast zu erzeugen, kann ein absolut blendfreies und homogenes Streiflicht eingesetzt werden. Dazu können beispielsweise Leuchten eingesetzt werden, wie sie in der DE 196 16 884 A1 beschrieben sind oder es werden Vorsatzoptiken zur Verwendung als Reflexbildoptik vor Leuchten eingesetzt, wie sie beispielsweise in der DE 198 15 250 A1 beschrieben sind.

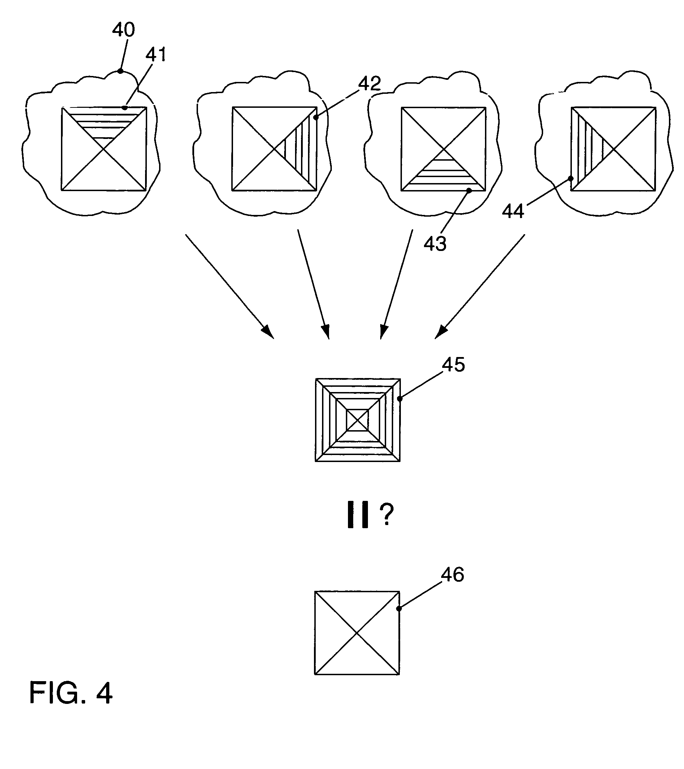

Die an die Verarbeitungseinrichtung 10 übermittelten Bilddaten werden zu einem neuen Bild 45 (s. Figur 4) zusammengesetzt. Dabei enthält das neue Bild 45 die vorab definierten, zu überprüfenden Bilddaten der Teilflächen 1 a, 1b mit für die Prüfung optimaler Ausleuchtung. Die Bilddaten könnten dabei flüchtig in der Verarbeitungseinrichtung 10 oder permanent auf einem Datenspeicher 11 (z. B. Festplatten) gespeichert werden, welcher über eine Datenverbindung 9 an die Verarbeitungseinrichtung 10 angebunden ist.

Mittels einer Anzeigeeinrichtung 12 können Bilddaten, Textausgaben etc. einem Benutzer kenntlich gemacht werden. Eine weitere Anzeigevorrichtung 13 symbolisiert eine rot/grün Ampel, welche einem Bediener oder Benutzer der Einrichtung zur optischen Oberflächenkontrolle anzeigt, ob ein Bauteil 1 fehlerfrei oder fehlerhaft ist.

Die Verarbeitungseinrichtung 10 kann dabei auch ein Kennsignal bei einem fehlerhaften Bauteil 1 erzeugen, mit dem eine automatische Ausschleusung dieses Bauteils 1 bewerkstelligt wird.

Die optischen Quellen 2 als auch die optische Erfassungseinrichtung 4 sind schwenkbar und/oder verfahrbar angeordnet, wobei dies manuell oder automatisch von der Verarbeitungseinrichtung 10 angesteuert vollzogen werden kann.

In Figur 2 ist ein Schnitt durch eine fehlerhafte Stelle 21 eines Bauteilausschnitts 23 dargestellt. Ein überwiegend paralleler Strahlengang 20 ist auf das Bauteil 1 derart gerichtet, dass ein Bauteilausschnitt 23 bzw. eine Teilfläche 1a, 1b mit einem spitzen Winkel 22 angestrahlt wird. Die Lichtstrahlen laufen dabei nahezu parallel zur Bauteiloberfläche entlang. Eine fehlerhafte Stelle 21, z. B. eine Beule, ein Pickel oder eine Delle, wird durch Lichtbeugung und/oder Abschattung sichtbar. Da es sich hierbei auch um äußerst geringe Oberflächenfehler handeln kann, wird gemäß der Erfindung die Auswertung der Bilddaten mittels einer Verarbeitungseinrichtung 10 bzw. eines hierauf ablaufenden Programms vorgenommen.

In Figur 3 ist eine Bildaufnahme 32 durch eine optische Erfassungseinrichtung 4 eines zu prüfenden Bauteils 1 in Form einer Fahrzeugtür 31 dargestellt. Die Bildaufnahme 32 könnte beispielsweise im Datenspeicher 11 gespeichert werden. Im vorliegenden Beispiel ist eine gestrichelt eingezeichnete Bildteilfläche 30 von einer optischen Quelle 2a erfindungsgemäß angestrahlt. Dabei wird nur die Bildteilfläche 30 zur Auswertung an die Verarbeitungseinrichtung 10 weitergeleitet oder die Verarbeitungseinrichtung 10 betrachtet in ihrer Auswertung nur diese Teilfläche 30.

In Figur 4 ist eine schematische Darstellung zum Verfahren der Zusammenführung von Bilddaten mit einem anschließenden Referenzbildvergleich dargestellt. Zu Überwachen sind dabei Bildteilflächen 41 - 44 der Bilder 40 eines zugehörigen Bauteils 1. Insgesamt sind vier Teilflächen 1a, 1b zu überwachen, so dass im Beispiel vier Bilder 40 von der optischen Erfassungseinrichtung 4 aufgenommen wurden. Die Verarbeitungseinrichtung 10 führt die Bilddaten der vorab definierten Teilflächen 1a, 1b zu einem neuen Bild 45 zusammen. In Figur 4 sind dies die Bildteilflächen 41 - 44. Nun wird das neu zusammengefügte Bild 45 mit einem Referenzbild 46 verglichen, welches durch ein Gleichzeichen mit nebenstehendem Fragezeichen symbolisiert ist. Das neue Bild 45 besteht dabei aus Bilddaten, welche optimal ausgeleuchtete Teilflächen 1a, 1b des Bauteils 1 repräsentieren. Mit einem Bildvergleich können nun Unterschiede zwischen dem Referenzbild und dem neuen Bild 45 ausgemacht werden. Werden fehlerhafte Stellen 21 detektiert besteht die Möglichkeit zur Ansteuerung von Signalgebern, wie beispielsweise eine rot/grün Ampel 13. Auch können detektierte Fehlstellen 21 oder fehlerhafte Gebiete optisch auf das Bauteil 1 projiziert werden, um einer Prüfperson anzuzeigen, welche Stellen schadhaft sind. Eine sichtbare oder unsichtbare Markierung (z. B. Farbe, Tinte, UV-lichtempfindliche Farbe) kann weiterhin aufgetragen werden, um die Fehlstellen 21 permanent zu markieren.

Wenn das Bauteil 1 eine eindeutige Identifizierung aufweist, beispielsweise in Form eines Barcodes, dieser in der Verarbeitungseinrichtung 10 den Bilddaten zugewiesen wurde, so lässt sich die optische Anzeige der Fehlstellen (z.B. Projektion auf das Bauteil) mittels des zum Bauteil 1 abgespeicherten Datensatzes durchführen. Weiterhin lässt sich ermitteln, wie erfolgreich sich eventuelle Korrekturmaßnahmen am Bauteil 1 erweisen.

### BEZUGSZEICHENLISTE

- 1: Bauteil
- 1a, 1b: Teilfläche
- 2, 2a: optische Quelle
- 3, 5 - 9: Datenleitung
- 4: optische Erfassungseinrichtung
- 10: Verarbeitungseinrichtung
- 11: Datenspeicher
- 12, 13: Anzeigevorrichtung
- 14: Fördereinrichtung
- 20: Strahlengang
- 21: fehlerhafte Stelle
- 22: spitzer Winkel
- 23: Bauteilausschnitt
- 30: Bildteilfläche
- 31: Fahrzeugtür
- 32: Bildaufnahme
- 40: Bild
- 41 - 44: Bildteilflächen
- 45: neues Bild
- 46: Referenzbild

## Patentansprüche

1. Verfahren zur optischen Oberflächenerfassung von einem oder mehreren Bauteilen (1), insbesondere von Karosserieteilen (31),
1.1 wobei das Bauteil (1) durch um das Bauteil herum angeordnete optische Quellen (2) mit überwiegend parallelem Strahlengang (20) beleuchtet wird,
**dadurch gekennzeichnet, dass**
1.2 durch die Verarbeitungseinrichtung (10) die optischen Quellen (2) derart angesteuert werden, dass eine Teilfläche (1a) des Bauteils (1) überwiegend durch mindestens eine optische Quelle (2a) mit einem spitzen Anstrahlwinkel (22) zur Teilfläche (1a) beleuchtet wird,
1.3 durch eine optische Erfassungseinrichtung (4) Bilddaten an die Verarbeitungseinrichtung (10) übermittelt und dort zumindest vorübergehend gespeichert werden, welche zumindest diese Teilfläche (1a) des Bauteils (1) wiedergeben,
1.4 die Verfahrensschritte 1.2 und 1.3 wiederholt werden, bis vorab definierten Teilflächen (1a,1b) des Bauteils (1) durch die Verarbeitungseinrichtung (10) erfasst sind und
1.5 durch die Verarbeitungseinrichtung (10) die Bilddaten der Teilflächen (1a,1b) zu einem neuen Bild (45) zusammengefügt werden.

2. Verfahren nach Anspruch 1 oder 2, **dadurch gekennzeichnet, dass** das neue Bild (45) mit einem gespeicherten Referenzbild (46) verglichen wird.

3. Verfahren nach einem der voranstehenden Ansprüche, **dadurch gekennzeichnet, dass** Abweichungen zwischen dem neuen Bild (45) und dem Referenzbild (46) angezeigt werden.

4. Verfahren nach einem der voranstehenden Ansprüche, **dadurch gekennzeichnet, dass** die Teilflächen (1a,1b) nacheinander beleuchtet werden.

5. Verfahren nach einem der voranstehenden Ansprüche, **dadurch gekennzeichnet, dass** Orte oder Gebiete der Abweichungen auf das Bauteil (1) projiziert werden.

6. Verfahren nach einem der voranstehenden Ansprüche, **dadurch gekennzeichnet, dass** die Orte oder die Gebiete der Abweichungen auf dem Bauteil (1) markiert werden.

7. Verfahren nach einem der voranstehenden Ansprüche, **dadurch gekennzeichnet, dass** die optischen Quellen (2) im wesentlichen auf einem Kreisbogen um das Bauteil (1) angeordnet werden.

8. Verfahren nach einem der voranstehenden Ansprüche, **dadurch gekennzeichnet, dass** die optische Erfassungseinrichtung (4) und/oder die optische Quelle (2) durch Signale der Verarbeitungseinrichtung (10) geschwenkt und/oder verfahren werden.

9. Verfahren nach einem der voranstehenden Ansprüche, **dadurch gekennzeichnet, dass** durch die Verarbeitungseinrichtung (10) Bilddaten von fehlerbehafteten Bauteilen (1) elektronisch gespeichert werden.

10. Verfahren nach einem der voranstehenden Ansprüche, **dadurch gekennzeichnet, dass** durch die Verarbeitungseinrichtung (10) erfasste Bauteile (1) statistisch ausgewertet werden.

11. Verfahren nach einem der voranstehenden Ansprüche, **dadurch gekennzeichnet, dass** nach Erkennung von Abweichungen ein Kennsignal erzeugt und/oder ausgegeben wird.

12. Verfahren nach einem der voranstehenden Ansprüche, **dadurch gekennzeichnet, dass** durch die Verarbeitungseinrichtung (10) ein Signal (6) zur Anzeige (13) und/oder zur Ausschleusung von fehlerhaften Bauteilen (1) generiert wird.

13. Verfahren nach einem der voranstehenden Ansprüche, **dadurch gekennzeichnet, dass** durch die Verarbeitungseinrichtung (10) eine Bauteilerkennung durchgeführt wird, wobei auf elektronisch gespeicherte Information zurückgegriffen wird.

14. Einrichtung zur optischen Oberflächenkontrolle von einem oder mehreren Bauteilen (1), insbesondere von Karosserieteilen (31), in einem Bauteilaufnahmegebiet mit einer Verarbeitungseinrichtung (10)
und mit optischen Quellen (2)
und mit mindestens einer durch die Verarbeitungseinrichtung (10) ansteuerbare optische Erfassungseinrichtung (4) mit der Bilddaten des Bauteilaufnahmegebietes an die Verarbeitungseinrichtung (10) übermittelbar sind, wobei die optischen Quellen (2) um das Bauteilaufnahmegebiet herum angeordnet sind und jeweils einen überwiegend parallelen Strahlengang aufweisen,
**dadurch gekennzeichnet, dass**
die Einrichtung derart ausgebildet ist, dass das Bauteilaufnahmegebiet durch mindestens eine von der Verarbeitungseinrichtung (10) bestimmbare und in ihrer Lichtleistung von dieser einstellbaren optischen Quelle (2) beleuchtbar ist.

15. Einrichtung nach Anspruch 14, **dadurch gekennzeichnet, dass** die Verarbeitungseinrichtung (10) derart ausgebildet ist, dass die optischen Quellen (2) derart ansteuerbar sind und/oder angesteuert werden, dass Teilflächen (1a) des in dem Bauteilaufnahmegebiet befindlichen Bauteils (1) überwiegend durch mindestens eine optische Quelle (2a) mit einem spitzen Anstrahlwinkel (22) zur Teilfläche (1a) beleuchtet werden, von der optischen Erfassungseinrichtung (4) übermittelte Bilddaten in der Verarbeitungseinrichtung (10) zumindest vorübergehend gespeichert werden und die Bilddaten der einzelnen Teilflächen (1a,1b) zu einem neuen Bild (45) zusammenführbar sind und/oder zusammengeführt werden.

16. Einrichtung nach Anspruch 14 oder 15, **dadurch gekennzeichnet, dass** die optischen Quellen (2) zumindest abschnittsweise ringförmig um das Bauteilaufnahmegebiet herum angeordnet sind.

17. Einrichtung nach einem der Ansprüche 14 bis 16, **dadurch gekennzeichnet, dass** diese derart ausgebildet ist, dass mit der Verarbeitungseinrichtung (10) Bilddaten flüchtig oder permanent elektronisch speicherbar sind.

18. Einrichtung nach einem der Ansprüche 14 bis 17, **dadurch gekennzeichnet, dass** diese derart ausgebildet ist, dass Abweichungen von Bauteilen (1) mittels der übermittelten Bilddaten und einem Referenzbild detektierbar und über eine Ausgabeeinheit anzeigbar sind.

19. Einrichtung nach einem der Ansprüche 14 bis 18, **dadurch gekennzeichnet, dass** diese derart ausgebildet ist, dass eine Bauteilerkennung durchführbar ist.

20. Computerprogrammprodukt, das in einen internen Speicher der Verarbeitungseinrichtung (10) ladbar ist und Programmabschnitte umfasst, mit denen mindestens ein Verfahrensschritt gemäß der Ansprüche 1 bis 13 ausgeführt wird und/oder ausführbar ist, wenn das Computerprogrammprodukt in der Verarbeitungseinrichtung (10) läuft.
